# EUROPÄISCHE PATENTSCHRIFT

(11) **EP 2 939 520 B1**
(45) Veröffentlichungstag und Bekanntmachung des Hinweises auf die Patenterteilung: **08.11.2017**
(21) Anmeldenummer: 15158575.9
(22) Anmeldetag: 11.03.2015
(51) Int. Cl.: A01D 89/00, A01F 15/10

(54) **Landwirtschaftliche Maschine**
Agricultural machine
Machine agricole

(30) Priorität: 29.04.2014 DE 202014003637 U
(43) Veröffentlichungstag der Anmeldung: 04.11.2015
(73) Patentinhaber: PÖTTINGER Landtechnik GmbH, 4710 Grieskirchen (AT)
(72) Erfinder: Aumayr, Klaus, 4612 Scharten (AT)
(74) Vertreter: Thoma, Michael

(56) Entgegenhaltungen:
- EP-A1- 1 153 539
- EP-A1- 1 574 124
- EP-A2- 2 689 654
- DE-A1- 19 841 598

## Beschreibung

Die vorliegende Erfindung betrifft eine landwirtschaftliche Maschine mit einem Gutaufnehmer zum Aufnehmen von Erntegut vom Boden sowie einem Förderrotor zum Weiterfördern des aufgenommenen Ernteguts durch einen Förderkanal hindurch, wobei der Förderkanal von einer beweglich gelagerten Förderkanalwand begrenzt ist, sodass sich durch Bewegen der Förderkanalwand der Förderkanalquerschnitt ändert.

Solche landwirtschaftlichen Maschinen können bspw. als Ladewagen oder Ballenpresse ausgebildet sein, wobei der Gutaufnehmer eine Pickup- bzw. eine Stachelwalze aufweisen kann, um auf dem Boden liegendes, halm- und/oder blattförmiges Erntegut aufnehmen zu können. Stromab des Gutaufnehmers ist bei solchen landwirtschaftlichen Maschinen üblicherweise ein Förderrotor vorgesehen, der das vom Gutaufnehmer aufgenommene Erntegut durch einen Förderkanal hindurch weiterfördert. Je nach Ausbildung der landwirtschaftlichen Maschine kann das Erntegut in einen Gutspeicher hineingefördert werden oder einem Verarbeitungsaggregat wie bspw. einer Ballenformkammer zugeführt werden.

Optional kann dem Förderrotor ein Schneidwerk zugeordnet sein, das üblicherweise mehrere in den Förderkanal hineinragende Schneidmesser umfasst, sodass das vom Förderrotor durch den Förderkanal hindurchgeförderte Erntegut zerschnitten wird.

Bei derartigen Maschinen kann es bei zu stark ansteigender Fördergutmenge zu einem Schoppern bzw. Verstopfen im Bereich des genannten Förderkanals kommen, insbesondere wenn der Förderwiderstand an den Schneidmessern zu stark ansteigt. Umgekehrt kann es bei zu geringen Fördergutvolumina zu einem ungenügenden Zerschneiden kommen, da sich das Erntegut mangels Gutstromdichte sozusagen an den Schneidmessern vorbeischieben kann.

Um hier Abhilfe zu schaffen, wurde bereits vorgeschlagen, die Förderkanalwand, die den Förderkanal gegenüberliegend dem Förderrotor begrenzt, beweglich zu lagern, sodass die Förderkanalwand sich bei anschwellendem Fördergutstrom vom Förderrotor wegbewegen und umgekehrt bei kleiner werdendem Fördergutstrom auf den Förderrotor zubewegen kann.

Aus der DE 10 2006 036 199 A1 ist eine Ballenpresse bekannt, bei der die dem Förderrotor gegenüberliegende Förderkanalwand an ihrem vorderen Ende schwenkbar angelenkt ist, sodass sie bei anschwellendem Fördergutstrom von dem Förderrotor wegschwenken kann, um den Förderkanalquerschnitt zu vergrößern und dem Fördergut sozusagen den Weg am Förderrotor bzw. den Schneidmessern vorbei zu erleichtern. Zusätzlich können die Schneidmesser, die durch Schlitze in der Förderkanalwand in den Förderkanal hineinragen, bei Bedarf vom Förderrotor wegbewegt werden, um den Förderwiderstand weiter zu verringern. Durch die genannte Beweglichkeit der Förderkanalwand kann es jedoch im Einlaufbereich des Förderkanals bei übermäßig anschwellenden Erntegutströmen weiter zu Verstopfungen bzw. zum Schoppern kommen. Andererseits leidet die Schnittqualität, wenn die Förderkanalwand im Bereich der Schneidmesser zu stark wegschwenkt. Aus der Schrift EP 15 74 124 A1 ist eine Ballenpresse bekannt, bei der ein Förderrotor aufgenommenes Erntegut durch einen Förderkanal entweder unter sich hindurch oder über sich hinweg in eine Ballenformkammer fördern kann, wobei ein Schneidwerk durch eine Förderkanalwandung hindurchragende Schneidmesser umfasst. Die genannte Förderkanalwandung ist hierbei in zwei winkelig ausgebildeten Langlöchern verschieblich gelagert, so dass sich die Förderkanalwandung zuerst ein Stück weit um die Förderrotorachse herum bewegen und dann vom Förderrotor weg bewegen kann.

Aus der Schrift DE 198 41 598 A1 ist eine ähnliche Ballenpresse bekannt, bei der die Förderkanalwandung, durch die die Schneidmesser hindurchragen, mittels zweier Hydraulikzylinder parallel zu sich selbst absenkbar ist, um den Spalt zum Förderrotor zu vergrößern.

Aus der Schrift EP 11 53 539 A1 ist ferner eine ähnliche Ballenpresse bekannt, bei der die Förderkanalwandung mit einem Ende in einem Gleitlager verschieblich geführt ist und mit dem anderen Ende an einem gespannten Seil angelenkt ist, um die Lage der Förderwandung einstellen zu können.

Ferner ist aus der Schrift DE 10 2011 013 242 A1 eine Ballenpresse bekannt, bei der der Förderrotor als Überkopfförderer ausgebildet ist und das Erntegut durch den über den Förderrotor hinwegführenden Förderkanal hindurchfördert. Die Schneidmesser hängen hierbei von oben durch die Förderkanalwand hindurch in den Förderkanal hinein. Durch einen solchen Überkopfförderer muss das vom Boden aufgenommene Erntegut nicht mehr eine s-förmige Förderbahn durchlaufen, da der Pickuprotor und der nachfolgende Förderrotor gleichsinnig umlaufen können. Zudem wird eine günstigere Einlaufrichtung in die Ballenformkammer leicht von oben her schräg nach unten bzw. waagerecht in die Ballenkammer hinein erreicht, sodass insgesamt der Rückstauwiderstand verringert und damit das Erntegutbett leichter gefördert werden kann, was die Schoppergefahr verringert. Trotzdem kann es bei übermäßigem Anschwellen des Fördergutstroms auch hier zum Schoppern kommen.

Der Erfindung liegt die Aufgabe zugrunde, eine verbesserte landwirtschaftliche Maschine der eingangs genannten Art zu schaffen, die Nachteile des Standes der Technik vermeidet und letzteren in vorteilhafter Weise weiterbildet. Insbesondere soll auch bei stärkeren Volumenschwankungen des Fördergutstroms die Gefahr von Verstopfungen bzw. Schoppern vermieden werden, ohne dies durch Einbußen bei der Schnittqualität zu erkaufen.

Erfindungsgemäß wird die genannte Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, die Förderkanalwand derart beweglich aufzuhängen, dass sich der Förderkanalquerschnitt entlang der Förderrichtung gleichmäßig vergrößert bzw. verjüngt, wenn die Förderkanalwand vom Förderrotor weg- bzw. auf diesen zubewegt wird. Erfindungsgemäß ist die Förderkanalwand linear verschieblich geführt. Durch eine über den Förderweg des Ernteguts gleichbleibende Vergrößerung bzw. Verkleinerung des Förderspalts zum Förderrotor hin kann eine über den Förderweg hinweg zumindest näherungsweise gleichbleibende Gutstromdichte erzielt werden, die in allen Bereichen des Förderkanals Schoppern vermeiden kann und umgekehrt dem Fördergut keine bereichsweise zu großen Ausdehnmöglichkeiten gibt.

Insbesondere können durch die linear verschiebliche Aufhängung der Förderkanalwand Kippbewegungen bzw. Schwenkbewegungen der Förderkanalwand vermieden werden, die im Bereich der Schwenk- bzw. Kippachse keine Querschnittsveränderungen ermöglicht, andererseits mit zunehmendem Abstand immer größere Abstandsänderungen vom Rotor und damit immer ungleichmäßiger werdende Förderkanalquerschnitte mit sich bringt, vermieden werden. Da sich bei linearer Verschiebung die Förderkanalwand nicht dreht oder kippt, kann eine gleichmäßige Vergrößerung oder Verkleinerung des Spaltmaßes zum Förderrotor hin erreicht werden. Zudem braucht die Förderkanalwand auch keine übermäßige Länge, um wie beim Stand der Technik die Schwenkachse weit genug vom hinsichtlich des Durchsatzes kritischen Förderkanalbereichs wegzulegen und der Schwenkbewegung dort einen ausreichenden Hebelarm zu geben. Es kann also eine kompaktere Bauweise erzielt werden.

In Weiterbildung der Erfindung kann die Bewegungsachse der linearen verschieblichen Aufhängung der Förderkanalwand sich im Wesentlichen radial zum Förderrotor erstrecken, sodass die Förderkanalwand zumindest näherungsweise gerade auf den Förderrotor zu und vom Förderrotor wegbewegbar ist. Die lineare Bewegungsachse muss dabei aber nicht exakt radial auf die Förderrotor-Drehachse stehen, sondern kann dazu auch versetzt angeordnet sein und/oder eine begrenzte Neigung gegenüber der exakten Radialrichtung haben, wobei bspw. eine spitzwinklige Neigung der linearen Bewegungsachse zur Radialrichtung bis zu +/-30° möglich sind, bspw. dergestalt, dass die Förderkanalwand beim Wegdrücken vom Förderrotor leicht in Umlaufrichtung bzw. Förderrichtung ein Stück weit mitgenommen wird.

Die linear verschiebliche Aufhängung der Förderkanalwand kann besonders dann vorteilhaft sein, wenn der Förderrotor in Weiterbildung der Erfindung als Überkopfrotor ausgebildet ist und sich der Förderkanal oberhalb des Förderrotors über diesen hinweg erstreckt. In diesem Fall kann die Förderkanalwand entgegen ihrem Eigengewicht und ggfs. Zusatzgewichten und/oder Federkräften bei anschwellendem Fördergutstrom vom Fördergut nach oben gedrückt werden und sich andererseits wieder selbsttätig absenken, wenn der Fördergutstrom abschwillt. Bei Ausbildung des Förderrotors als Überkopfförderer kann sich dieser gleichsinnig zu einem Aufsammelrotor drehen, der bspw. in Form einer Stachelwalze einer Pickup ausgebildet sein kann. Hierdurch kann der Fördergutstrom ohne s-förmige Krümmung gleichmäßig vom Gutaufnehmer an der Förderrotor übergeben werden und durch den Förderkanal hindurchströmen, der von der genannten Förderkanalwand begrenzt wird.

Die linear verschiebliche Lagerung des Förderkanals kann grundsätzlich verschieden ausgebildet sein, bspw. in Form einer Langlochführung und/oder einer geraden Kulissenführung. In Weiterbildung der Erfindung können in einer geraden Führungskulisse Stützrollen laufen, sodass sich die Förderkanalwand ohne Klemmgefahr auf- und ab bzw. vom Förderrotor weg- und auf den Förderrotor zubewegen kann. Anstelle solcher Stützrollen bzw. Führungsrollen kann die Schiebeführung jedoch auch Gleitführungselelemente umfassen, bspw. in Form eines Gleitsteins, der in einem Langloch oder einer Kulisse läuft. Gegebenenfalls können auch Gleitführungsbolzen in einem Langloch laufen, um die Förderkanalwand linear verschieblich zu führen.

Ferner ist dem Förderrotor ein Schneidwerk zugeordnet, das bei Ausbildung des Förderrotors als Überkopfförderer von oben her in den Förderkanal hineinhängende Schneidmesser umfasst.

Um bei stark schwankenden Fördergutvolumina, wenn ein Verschieben der Förderkanalwand alleine nicht mehr reicht, ein Schoppern im Förderkanal zu vermeiden, kann es vorteilhaft sein, wenn die Schneidmesser ebenfalls vom Förderrotor weg- bzw. auf den Förderrotor zu bewegbar sind und/oder zumindest teilweise aus dem Förderkanal herausbewegbar gelagert sind, bspw. wegschwenkbar oder linear verschieblich herausfahrbar aufgehängt sind.

Dabei ist der Förderkanal relativ zu den Schneidmessern beweglich angeordnet, sodass die Förderkanalwand hin und her bewegbar ist, ohne dass die Schneidmesser der Förderkanalwandbewegung folgen müssen oder umgekehrt die Schneidmesser auf den Schneidrotor zu- bzw. von diesem wegbewegbar sind, ohne dass sich die Förderkanalwand bewegen muss. Durch eine solche relative Beweglichkeit können variablerer Verfahrensoptionen erreicht werden.

Erfindungsgemäß werden die Ausweichbewegungen der Förderkanalwand einerseits und der Schneidmesser andererseits hinsichtlich ihrer zeitlichen Abfolge aufeinander abgestimmt, ggf. auch hinsichtlich der jeweils erforderlichen Stellkräfte. In Weiterbildung der Erfindung kann die Beweglichkeit der Förderkanalwand so gesteuert sein, dass sich bei anschwellendem Fördergutstrom zunächst die Förderkanalwand vom Rotor wegbewegt und erst in einem weiteren Schritt die Schneidmesser vom Förderrotor wegbewegt werden, wenn die Vergrößerung des Förderkanalquerschnitts durch die Bewegung der Förderkanalwand alleine nicht mehr reicht. Hierdurch kann eine vorzeitige Verschlechterung der Schnittqualität vermieden werden. Die Steuerung der Bewegungen kann dabei bspw. durch entsprechende Federbeaufschlagung erzielt werden, bspw. dergestalt, dass die Rückstellkräfte von Förderkanalwand und Schneidmesser größenmäßig so beschaffen sind, dass sich das Fördergut zunächst die Förderkanalwand wegdrücken kann und erst bei noch größeren Kräften sich dann die Schneidmesser wegbewegen. Alternativ kann auch eine gesteuerte Verriegelung der Schneidmesser vorgesehen sein, die bspw. erst dann gelöst wird, wenn die Förderkanalwand eine bestimmte Verschiebestellung, bspw. ihre maximal vom Förderrotor wegbewegte Stellung erreicht hat.

In alternativer Weiterbildung der Erfindung kann die Bewegungssteuervorrichtung aber auch derart beschaffen sein, dass sich zunächst die Schneidmesser wegbewegen und in einem weiteren Schritt die Förderkanalwand vom Förderrotor wegbewegt wird. Dies kann durch größenmäßige Abstimmung der Rückstellkräfte auf die Schneidmesser und die Förderkanalwand erreicht werden, bspw. durch entsprechende Ausbildung von Federeinrichtungen. Auch hier ist eine gesteuerte Verriegelung einsetzbar, bspw. dergestalt, dass eine Verschiebebewegung der Förderkanalwand erst zugelassen wird bzw. die hierfür vorgesehene Verriegelung erst dann gelöst wird, wen sich die Schneidmesser zumindest ein Stück weit vom Förderrotor wegbewegt haben.

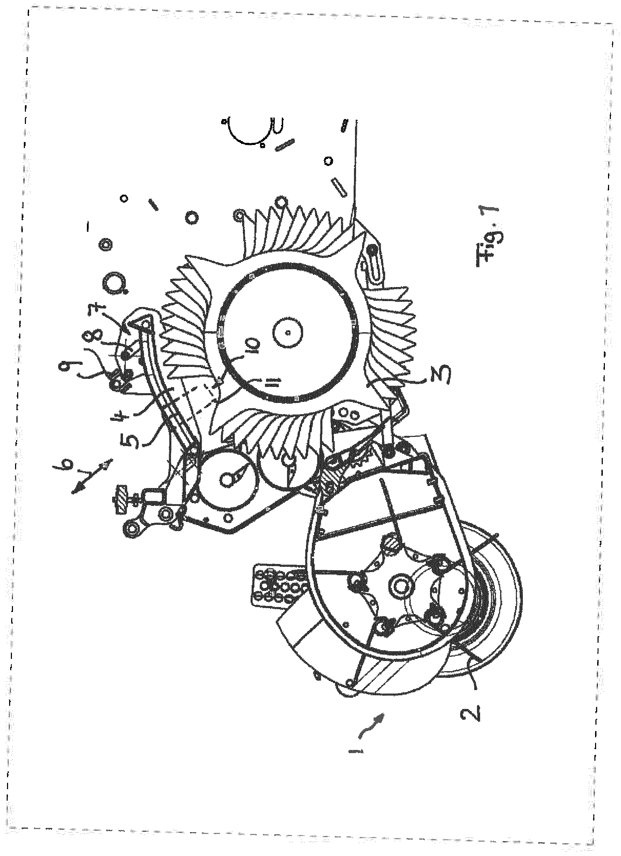

Die Erfindung wird nachfolgen anhand eines bevorzugten Ausführungsbeispiels und zugehöriger Zeichnungen näher erläutert. In den Zeichnungen zeigen:
- Fix. 1:: eine ausschnittsweise Seitenansicht einer landwirtschaftlichen Maschine, die deren Gutaufnehmer und den stromab angeordneten Förderrotor zeigt, wobei der Förderrotor als Überkopfförderer ausgebildet ist und ein sich oberhalb des Förderrotors über den Förderrotor hinweg erstreckender Förderkanal von einem oberhalb des Förderrotors angeordneten Förderkanalwand begrenzt wird, die in Figur 1 in ihrer unausgelenkten, nahe am Förderrotor liegenden Grundstellung gezeigt ist, und

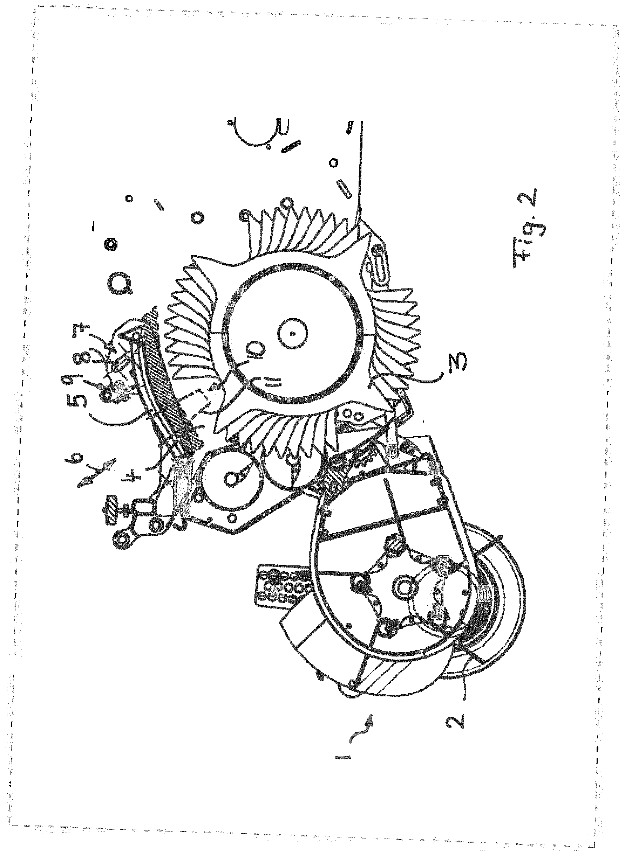

- Fig. 2:: eine Seitenansicht der landwirtschaftlichen Maschine ähnlich Figur 1, wobei die Förderkanalwand in ihrer nach oben ausgelenkten, den Förderkanalquerschnitt vergrößernden Stellung gezeigt ist.

Wie die Figuren zeigen, kann die landwirtschaftliche Maschine, die bspw. als Ladewagen oder Ballenpresse ausgebildet sein kann, einen Gutaufnehmer 1 zum Aufsammeln von Erntegut vom Boden umfassen, der bspw. eine rotierendantreibbare Stachelwalze 2 umfassen kann. Die genannte Stachelwalze 2 kann Teil einer Pickup sein, die in an sich bekannter Weise über den Boden geführt werden kann, bspw. durch Stützräder oder andere Höhenführungsmittel.

Dem genannten Gutaufnehmer 1 ist ein Förderrotor 3 nachgeordnet, der in an sich bekannter Weise Mitnehmerzinken über seinen Umfang verteilt aufweisen kann. Der genannte Förderrotor 3 kann vorteilhafterweise als Überkopfförderer ausgebildet sein, wobei sich ein Förderkanal 4, durch den hindurch der Förderrotor 3 das vom Gutaufnehmer 1 kommende Gut hindurchfördert, oberhalb des Förderrotors 3 über diesen hinweg erstrecken kann.

Der Förderrotor 3 und die Stachelwalze 2 des Gutaufnehmers können gleichsinnig rotierend angetrieben werden, sodass der aufgenommene Erntegutstrom nicht s-förmig um die Stachelwalze 2 und Förderrotor 3 herumgeschlungen, sondern über die Stachelwalze 3 und daran anschließend über den Förderrotor 3 hinweggefördert wird.

Der über dem Förderrotor 3 liegende Förderkanal 4 wird zumindest abschnittsweise nach oben hin durch eine Förderkanalwand 5 begrenzt, die als Leitblech ausgebildet sein kann. Die genannte Förderkanalwand 5 kann zumindest näherungsweise bogenförmig gekrümmt der Umfangsrichtung des Förderrotors 3 folgen.

Wie Figur 1 zeigt, kann sich die Förderkanalwand 5 bspw. über einen Sektor des Förderrotors 3 über einen Winkelbereich von etwa 30° bis 60° erstrecken, wobei jedoch auch längere oder kürzere Ausbildungen der Förderkanalwand vorgesehen sein können. Die Förderkanalwand 5 kann sich bspw. in einem Sektorabschnitt von etwa 10 Uhr bis 12 Uhr erstrecken und/oder einem Abschnitt der oberen Hälfte des Förderrotors 3 zugeordnet sein, der auf der dem Gutaufnehmer 1 zugewandten Hälfte des Förderrotors liegt.

Wie ein Vergleich der Figuren 1 und 2 zeigt, kann die Förderkanalwand 5 linear verschoben werden, sodass sie sich vom Förderrotor 3 weg- und auf diesen zubewegt, wobei die Bewegungsachse 6 der Förderkanalwand 5 näherungsweise radial zum Förderrotor 3 ausgerichtet sein kann. Beispielsweise kann sich die Bewegungsachse 6 da spitzwinklig geneigt zur Vertikalen erstrecken, bspw. unter einem Winkel von etwa 20° bis 40° zur Vertikalen.

Die Schiebeführung 7, die die lineare Verschiebbarkeit der Förderkanalwand 5 ermöglicht, kann grundsätzlich verschieden ausgebildet sein. Wie die Figuren zeigen, kann die Schiebeführung 7 eine Langlochführung 8 umfassen, insbesondere im Bereich gegenüberliegender Endabschnitte der Förderkanalwand 5. Dabei können in Langlöchern Führungsstifte oder Gleitsteine aufgenommen sein, die eine entsprechende Verschiebbarkeit ermöglichen.

Alternativ oder zusätzlich zu einer solchen Langlochführung 8 kann auch eine Kulissenführung 9 vorgesehen sein, die eine vorzugsweise gerade ausgebildete Führungskulisse und damit zusammenwirkende Stützrollen oder Führungsrollen umfassen kann, um ein leichtes Verschieben zu ermöglichen. An einer solchen Führungskulisse können jedoch auch andere Führungselemente wie bspw. Gleitlager insbesondere in Form von Gleitsteinen vorgesehen sein.

Insbesondere können die genannte Langlochführung 8 und/oder die genannte Kulissenführung 9 und/oder eine anders ausgebildete Schiebeführung 7 derart beschaffen sein, dass die Förderkanalwand 4 entlang einer geraden Bewegungsachse ohne rotatorische Bewegungskomponente bewegt werden kann, d.h. die Förderkanalwand 4 kann in gerader Richtung verschoben werden, ohne dabei verdreht zu werden.

Dem Förderrotor 3 kann optional ein Schneidwerk 10 zugeordnet sein, das von oben her in den Förderkanal 4 hineinhängende Schneidmesser 11 aufweisen kann, wie die strichierte Darstellung in Figur 1 verdeutlicht. Die Förderkanalwand 5 kann dabei Längsschlitze aufweisen, durch die sich die genannten Schneidmesser 11 hindurch erstrecken können.

Bezüglich der Anordnung der Schneidmesser 11 sind verschiedene Varianten möglich. In Weiterbildung der Erfindung können die genannten Schneidmesser 11 starr mit der Förderkanalwand 5 gekoppelt sein, sodass sich die Förderkanalwand 5 und die Schneidmesser 11 zusammen bewegen können, wobei die gemeinsame Bewegung durch die zuvor beschriebene Bewegungsachse 6 der Schiebeführung 7 vorgegeben ist.

Alternativ zu einer solchen Koppelung von Schneidmessern 11 und Förderkanalwand 5 können die genannten beiden Bauteile auch unabhängig voneinander beweglich gelagert sein, sodass die Förderkanalwand 5 vom Förderrotor 3 wegbewegt werden kann, ohne dass die Messer 11 gleichzeitig wegbewegt werden. Umgekehrt können die Schneidmesser 11 vom Förderrotor 3 wegbewegt werden, ohne dass zwangsweise die Förderkanalwand 5 mitbewegt wird.

Die Bewegungen der Schneidmesser 11 und der Förderkanalwand 4 können dabei in der eingangs erläuterten Weise durch eine geeignet ausgebildete Steuervorrichtung derart gesteuert bzw. aufeinander abgestimmt werden, dass bei einem ersten Betriebsmodus bei anschwellendem Gutstrom zunächst die Förderkanalwand 4 vom Förderrotor 3 wegbewegt und erst in einem weiteren Schritt die Schneidmesser 11 vom Förderrotor 3 wegbewegt werden. Das Zurückfahren auf den Förderrotor 3 bei nachlassendem Gutstrom kann dabei zuerst von den Schneidmessern 11 und in einem weiteren Schritt von der Förderkanalwand 5 ausgeführt werden. In einem alternativen Betriebsmodus können bei anschwellendem Fördergutstrom zunächst die Schneidmesser 11 vom Förderrotor 3 wegfahren und in einem weiteren Schritt die Förderkanalwand 4 wegfahren. Bei nachlassendem Fördergutstrom kann zunächst die Förderkanalwand 5 wieder näher auf den Förderrotor 3 zufahren, wobei dann in einem weiteren Schritt die Schneidmesser 11 wieder zugestellt werden können.

## Patentansprüche

1. Landwirtschaftliche Maschine mit einem Gutaufnehmer (1) zum Aufnehmen von Erntegut vom Boden sowie einem Förderrotor (3) zum Weiterfördern des aufgenommenen Ernteguts durch einen Förderkanal (4) hindurch, wobei der Förderkanal (4) zumindest abschnittsweise von einer beweglich gelagerten Förderkanalwand (5) begrenzt ist, sodass sich durch Bewegen der Förderkanalwand (5) der Förderkanalquerschnitt ändert, wobei die Förderkanalwand linear verschieblich geführt ist, wobei dem Förderrotor (3) ein Schneidwerk (10) zugeordnet ist, das in den Förderkanal (4) hineinragende Schneidmesser (11) umfasst, wobei die Förderkanalwand (5) und die Schneidmesser (11) relativ zueinander beweglich sind, sodass die Förderkanalwand (5) bei im Förderkanal (4) verbleibenden Schneidmessern (11) vom Förderrotor (3) wegbewegbar ist und die Schneidmesser (11) bei in unverändertem Abstand vom Förderrotor (3) positionierter Förderkanalwand (5) vom Förderrotor (3) wegbewegbar sind, **dadurch gekennzeichnet, dass** eine Steuervorrichtung zum Steuern der zeitlichen Abfolge der linearen Verschiebung der Förderkanalwand (5) und der Bewegung der Schneidmesser (11) vorgesehen ist.

2. Landwirtschaftliche Maschine nach dem vorhergehenden Anspruch, wobei die Förderkanalwand (5) im Wesentlichen radial zum Förderrotor (3) von dem Förderrotor (3) weg und auf den Förderrotor zu linear verschieblich ist.

3. Landwirtschaftliche Maschine nach einem der vorhergehenden Ansprüche, wobei eine Schiebführung (7) für die Förderkanalwand (5) eine gerade Bewegungsachse (6) aufweist.

4. Landwirtschaftliche Maschine nach dem vorhergehenden Anspruch, wobei die gerade Bewegungsachse (6) unter einem spitzen Winkel von bis zu +/- 30° zu einer Radialen, die durch die Förderrotor-Drehachse und die Mitte der Förderkanalwand (5) geht, geneigt und/oder unter einem spitzen Winkel im Bereich von +/- 5° bis +/- 60°, vorzugsweise +/- 10° bis +/- 40° zur Vertikalen geneigt ist.

5. Landwirtschaftliche Maschine nach einem der vorhergehenden Ansprüche, wobei die Förderkanalwand (5) durch eine Langlochführung (8) und/oder eine Kulissenführung (9) linear verschieblich geführt ist.

6. Landwirtschaftliche Maschine nach einem der vorhergehenden Ansprüche, wobei der Förderrotor (3) als Überkopfförderer ausgebildet ist und die Förderkanalwand (5) oberhalb des Förderrotors (3) angeordnet ist und/oder eine Förderkanaldecke bildet.

7. Landwirtschaftliche Maschine nach einem der vorhergehenden Ansprüche, wobei die Steuervorrichtung derart ausgebildet ist, dass bei Anschwellen des Fördergutstroms durch den Förderkanal (4) zuerst die Förderkanalwand (5) vom Förderrotor (3) wegbewegt und in einem weiteren Schritt die Schneidmesser (11) vom Förderrotor wegbewegt werden.

8. Landwirtschaftliche Maschine nach einem der Ansprüche 1-6, wobei die Steuervorrichtung derart ausgebildet ist, dass bei Anschwellen des Fördergutstroms durch den Förderkanal (4) zuerst die Schneidmesser (11) vom Förderrotor (3) weggefahren werden und in einem weiteren Schritt die Förderkanalwand (5) vom Förderrotor (3) wegbewegt wird.

## Claims

1. Agricultural machine with a material pick-up (1) for the picking up of harvested material from the ground, as well as a conveyor rotor (3) for the further conveyance of the picked-up harvested material through a feed channel (4), wherein the feed channel (4) is separated at least in sections from a moveably-mounted feed channel wall (5), so that the feed channel cross-section is altered through movement of the feed channel wall (5), wherein the feed channel wall is guided to be linearly moveable, wherein the conveyor rotor (3) is assigned a cutting unit (10) that comprises cutting blades (11) projecting into the feed channel (4), wherein the feed channel wall (5) and the cutting blades (11) are moveable relative to one another, so that the feed channel wall (5) can be moved away from the conveyor rotor (3) with the cutting blades (11) remaining in the feed channel, and the cutting blades (11) can be moved away from the conveyor rotor (3), with the feed channel wall (5) positioned in unchanged distance from the conveyor rotor (3), **characterized in that** a control device is provided for controlling the chronological sequence of the linear displacement of the feed channel wall (5) and the movement of the cutting blades (11).

2. Agricultural machine according to the preceding claim, wherein the feed channel wall (5) may be displaced essentially in a radial manner with respect to the conveyor rotor (3) or away from the conveyor rotor (3), and in a linear manner towards the conveyor rotor (3).

3. Agricultural machine according to one of the preceding claims, wherein a slide guide (7) for the feed channel wall (5) comprises a straight axis of motion (6).

4. Agricultural machine according to the preceding claim, wherein the linear axis of motion (6) is inclined under a pointed angle of up to +/- 30° to a radial, which goes through the axis of rotation of the conveyor rotor and the center of the feed channel wall (5) and/or inclined under a pointed angle in a range of +/- 5° to +/-60°, preferably +/- 10° to +/-40° to the vertical.

5. Agricultural machine according to one of the preceding claims, wherein the feed channel wall (5) is guided through an elongated hole guide (8) and/or a slotted guide (9) in a linear displaceable manner.

6. Agricultural machine according to one of the preceding claims, wherein the conveyor rotor (3) is formed as an overhead conveyor, and the feed channel wall (5) is arranged above the conveyor rotor (3) and/or forms a feed channel ceiling.

7. Agricultural machine according to one of the preceding claims, wherein the control device is designed in such a way that, during the increase of the flow of conveyed material through the feed channel (4), first the feed channel wall (5) moves away from the conveyor rotor (3), and in a further step, the cutting blades (11) are moved away from the conveyor rotor.

8. Agricultural machine according to one of claims 1-6, wherein the control device is designed in such a way that, during the increase of the flow of conveyed material through the feed channel (4), the cutting blades (11) are first driven away from the conveyor rotor (3), and in a further step, the feed channel wall (5) is moved away from the conveyor rotor (3).

## Revendications

1. Machine agricole comportant un pick-up de récolte (1) pour ramasser la récolte depuis le sol ainsi qu'un rotor de transport (3) pour transporter la récolte cueillie à travers un canal de transport (4), le canal de transport (4) étant au moins limité par section par une paroi de canal de transport (5) montée de façon mobile, pour ainsi modifier la section transversale de la paroi de canal de transport par le déplacement de la paroi de canal de transport (5), la paroi de canal de transport étant guidée de façon à pouvant se déplacer axialement linéaire, un dispositif de coupe (10) étant assigné au rotor de transport (3) lequel comprend des lames de coupe (11) saillantes dans le canal de transport (4), la paroi du canal de transport (5) et la lame de coupe (11) étant relativement mobiles l'une par rapport à l'autre de façon à pouvoir éloigner la paroi du canal de transport (5) du rotor de transport (3) vers les lames de coupes (11) restants dans le canal de transport (4) et à pouvoir éloigner les lames de coupe (11) du rotor de transport (3) vers la paroi du canal de transport (5) positionnée à une distance inchangée du rotor de transport (3), **caractérisé en ce qu'**un dispositif de commande étant prévu pour commander la séquence temporelle du déplacement linéaire de la paroi du canal de transport (5) et le mouvement des lames de coupe (11).

2. Machine agricole selon la revendication précédente, dans laquelle la paroi du canal de transport (5) pouvant se déplacer linéairement, essentiellement de façon à s'éloigner du rotor de transport (3), de façon radiale par rapport au rotor de transport et de façon à être orienté vers le rotor de transport (3).

3. Machine agricole selon l'une quelconque des revendications précédentes, dans laquelle un guidage à coulisse (7) pour la paroi du canal de transport (5) présente un axe de déplacement droit (6).

4. Machine agricole selon la revendication précédente, dans laquelle l'axe de déplacement droit (6) est incliné selon un angle aigu pouvant atteindre +/- 30 ° par rapport à une radiale traversant l'axe de rotation du rotor de transport et le centre de la paroi du canal de transport (5) et/ou est incliné selon un angle aigu compris dans la plage de +/- 5 ° à +/- 60 °, de préférence +/- 10 ° à +/- 40 ° par rapport à la verticale.

5. Machine agricole selon l'une quelconque des revendications précédentes, dans laquelle la paroi du canal de transport (5) est guidée de manière à se déplacer linéairement à l'aide d'un guidage à trous oblongs (8) et/ou d'un guidage à coulisse (9).

6. Machine agricole selon l'une quelconque des revendications précédentes, dans laquelle le rotor de transport (3) est formé comme un transporteur à alimentation par le haut et la paroi (5) du canal de transport est agencée au-dessus du rotor de transport (3) et/ou forme un plafond pour le canal de transport.

7. Machine agricole selon l'une quelconque des revendications précédentes, dans laquelle le dispositif de commande est conçu de sorte à ce que la paroi (5) du canal de transport s'éloigne d'abord du rotor de transport (3) lors de l'augmentation du flux de matière à transporter à travers du canal de transport (4) et à ce que dans une deuxième étape, les lames de coupe (11) s'éloignent du rotor de transport (3).

8. Machine agricole selon l'une quelconque des revendications 1 à 6, dans laquelle le dispositif de commande est conçu de sorte à ce que les lames de coupe (11) soient d'abord écartées du rotor de transport (3) lors de l'augmentation du flux de matière à transporter à travers du canal de transport (4) et à ce que dans une nouvelle étape, la paroi du canal de transport (5) est déplacée de façon à s'éloigner du rotor de transport (3).
